# FASCICULE DE BREVET EUROPEEN

(11) **EP 2 433 216 B1**
(45) Date de publication et mention de la délivrance du brevet: **05.06.2013**
(21) Numéro de dépôt: 10724723.1
(22) Date de dépôt: 15.04.2010
(51) Int. Cl.: G06F 11/10, G06F 11/14, H04L 29/08, H04L 29/14

(54) **SYSTEME DE SAUVEGARDE DE DONNEES**
DATEN-BACKUP-SYSTEM
DATA BACKUP SYSTEM

(30) Priorité: 18.05.2009 FR 0953277
(43) Date de publication de la demande: 28.03.2012
(73) Titulaire: Alcatel Lucent, 75007 Paris (FR)
(72) Inventeur: PINAULT, Francis, F-34990 Juvignac (FR)
(74) Mandataire: Mouney, Jérôme
(86) Numéro de dépôt international: PCT/EP2010/054956
(87) Numéro de publication internationale: WO 2010/133408

(56) Documents cités:
- WO-A-2006/056681

## Description

La présente invention concerne un système de sauvegarde de données, et plus particulièrement des serveurs aptes à fournir un service de sauvegarde de données.

Actuellement, il existe un besoin de sauvegarder des données en garantissant leur intégrité et leur disponibilité dans le temps. Une telle sauvegarde de données requiert généralement une infrastructure complexe dont le coût dépend de la sensibilité des données et de la durée de conservation souhaitée.

Des solutions existantes proposent un téléchargement sécurisé des données, une signature des données, et une mémorisation des données dans au moins deux sites éloignés afin d'éviter les conséquences d'éventuels incidents, tels que des séismes, des inondations, ou des actions terroristes. De telles solutions requièrent des infrastructures à coût très élevé, par exemple relatifs aux structures des bâtiments, à l'air conditionné, à l'atmosphère contrôlée, aux éventuels gardiens, ou encore aux procédures informatiques de sécurité. Par ailleurs, un même ensemble de données est souvent copié en un certain nombre d'exemplaires (généralement huit) pour pallier à d'éventuels défauts électroniques dans les moyens de stockage.

Le document WO2006/056681 A1 décrit un système et procédé de sauvegarde distribuée sur un ensemble de serveurs connectés en réseau, utilisant un répartiteur des données sur les différents serveurs de stockage.

Un objectif de l'invention est de remédier aux inconvénients précédents en proposant un système de sauvegarde de données garantissant l'intégrité et la disponibilité de données dans le temps avec un minimum de coût pour l'utilisateur.

Pour atteindre cet objectif, un procédé pour sauvegarder un ensemble de données d'un utilisateur à travers un réseau de télécommunications, est caractérisé en ce qu'il comprend les étapes suivantes dans un terminal :
récupérer depuis un serveur d'application une table contenant des ensembles de facteurs de risque respectivement associés à des serveurs de sauvegarde,
attribuer un niveau de confiance à chaque serveur de sauvegarde identifié dans la table en fonction de l'ensemble de facteurs de risque associé au serveur de sauvegarde,
sélectionner au moins trois serveurs de sauvegarde en fonction des niveaux de confiance attribués respectivement aux serveurs de sauvegarde, et
transmettre l'ensemble de données à chaque serveur de sauvegarde sélectionné qui mémorise l'ensemble de données.

Avantageusement, l'invention permet de réduire considérablement les coûts de sauvegarde de données tout en garantissant l'intégrité et la disponibilité de données dans le temps. L'utilisateur, à titre privé ou professionnel, peut ainsi sauvegarder des données, telles que des données critiques, confidentielles ou personnelles de manière sûre et pérenne. En outre, l'utilisateur n'a plus besoin d'utiliser son propre système de base de données et de se soucier des risques de pertes de données.

Selon d'autres caractéristiques de l'invention, les serveurs de sauvegarde peuvent être sélectionnés en outre en fonction d'une qualité de sauvegarde requise par l'utilisateur, la qualité de sauvegarde pouvant être déterminée par au moins l'un des paramètres suivants incluant le statut privé, public ou professionnel de l'opérateur gérant chaque serveur de sauvegarde, la durée de sauvegarde souhaitée de l'ensemble de données, et un facteur de fiabilité requis par l'utilisateur par rapport à la conservation de l'ensemble de données. Par ailleurs, chaque ensemble de facteurs de risque relatif à un serveur de sauvegarde peut comprendre au moins un facteur parmi un facteur de risque de séisme, un facteur de risque de cyclone, un facteur de risque d'inondation, un facteur d'échelle de température, et un facteur de stabilité politique. Il sera entendu que la liste des facteurs de risque n'est pas limitative et peut être étendue en fonction de l'évolution des technologies et des contraintes relatives à la présence d'un serveur de sauvegarde dans un lieu spécifique.

L'invention concerne également un terminal pour sauvegarder un ensemble de données d'un utilisateur à travers un réseau de télécommunications, caractérisé en ce qu'il comprend :
des moyens pour récupérer depuis un serveur d'application une table contenant des ensembles de facteurs de risque respectivement associés à des serveurs de sauvegarde,
des moyens pour attribuer un niveau de confiance à chaque serveur de sauvegarde identifié dans la table en fonction de l'ensemble de facteurs de risque associé au serveur de sauvegarde,
des moyens pour sélectionner au moins trois serveurs de sauvegarde en fonction des niveaux de confiance attribués respectivement aux serveurs de sauvegarde, et
des moyens pour transmettre l'ensemble de données à chaque serveur de sauvegarde sélectionné qui mémorise l'ensemble de données.

L'invention concerne également un serveur d'application pour sauvegarder un ensemble de données d'un utilisateur à travers un réseau de télécommunications, caractérisé en ce qu'il comprend des moyens pour déterminer des ensembles de facteurs de risque respectivement associés à des serveurs de sauvegarde et transmettre une table contenant lesdits ensembles de facteurs de risque à un terminal, afin que le terminal attribue un niveau de confiance à chaque serveur de sauvegarde identifié dans la table en fonction de l'ensemble de facteurs de risque et transmette un ensemble de données à au moins trois serveurs de sauvegarde sélectionnés en fonction des niveaux de confiance attribués respectivement aux serveurs de sauvegarde.

L'invention se rapporte encore à un programme d'ordinateur apte à être mis en oeuvre dans un terminal, ledit programme comprenant des instructions qui, lorsque le programme est exécuté dans ledit terminal, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de sauvegarde de données selon une réalisation de l'invention, et
- la figure 2 est un algorithme d'un procédé de sauvegarde de données selon une réalisation de l'invention.

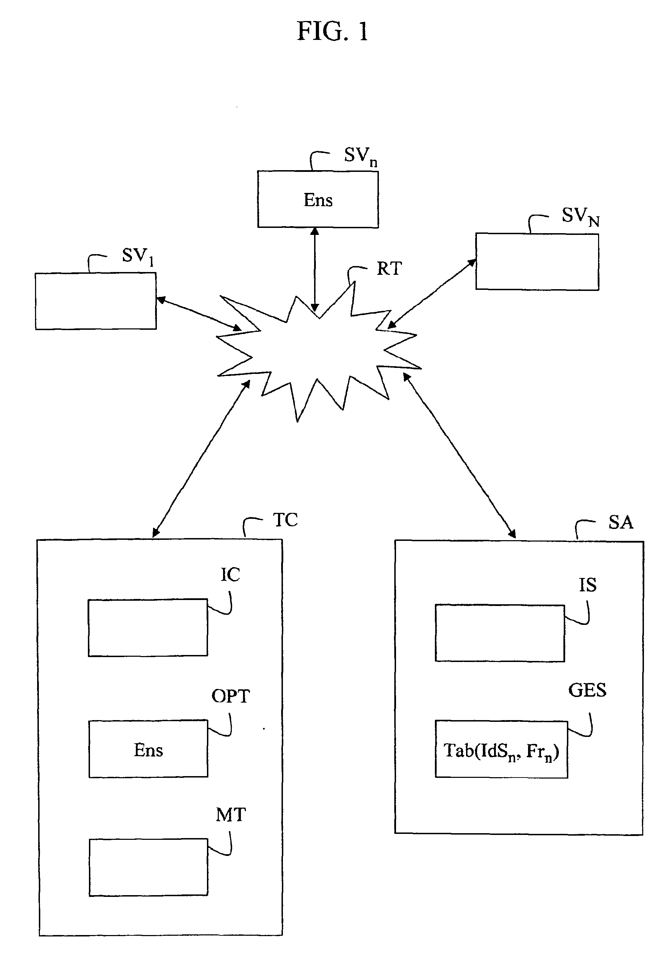

En référence à la figure 1, un système de sauvegarde de données comprend un terminal de communication TC, un serveur d'application SA et un ensemble de serveurs de sauvegarde SV₁ à SV_{N}, aptes à communiquer entre eux à travers un réseau de télécommunications RT.

Le réseau de télécommunications RT peut être un réseau filaire ou sans fil, ou une combinaison de réseaux filaires et de réseaux sans fil.

Selon un exemple, le réseau de télécommunications RT comprend un réseau de paquets à haut débit de type IP ("Internet Protocol" en anglais), tel que l'internet ou un intranet, ou bien un réseau privé spécifique à une société supportant un protocole propriétaire.

Le terminal de communication TC peut être un ordinateur personnel ou un terminal intelligent pouvant communiquer avec le réseau de télécommunications par une liaison filaire ou sans fil.

A titre d'exemples, un terminal de communication TC peut comprendre un dispositif ou objet électronique de télécommunications qui est personnel à l'utilisateur et qui peut être un assistant numérique personnel communicant PDA ("Personal Digital Assistant" en anglais), ou un téléphone intelligent (SmartPhone), pouvant être relié à une borne d'accès d'un réseau sans fil de faible portée du type WLAN ("Wireless Local Area Network" en anlais) ou conforme à l'une des normes 802.1x, ou de moyenne portée selon le protocole WIMAX ("World wide interoperability Microwave Access" en anglais). Le terminal de communication TC peut être un terminal de radiocommunications cellulaire mobile apte à accéder à un réseau de radiocommunications de type GSM ("Global System for Mobile communications" en anglais) ou UMTS ("Universal Mobile Telecommunications System" en anglais).

L'ensemble de serveurs de sauvegarde SV₁ à SV_{N} comprend au moins N = 3 serveurs. Les serveurs peuvent être gérés respectivement par des opérateurs différents, ou gérés en partie ou en totalité par un même opérateur.

Chaque serveur de sauvegarde SVₙ, avec 1 ≤ n ≤ N, est apte à mémoriser des données transmises depuis le terminal de communication TC. Les données mémorisées peuvent être de tous types, telles que des données critiques, confidentielles ou personnelles, dans un quelconque format, tel qu'un format texte, audio ou vidéo.

Chaque serveur de sauvegarde SVₙ a la fonctionnalité de mémoriser et de conserver des données et de restituer ces dernières dans le format dans lequel elles ont été initialement mémorisées. Par ailleurs, chaque serveur SVₙ est apte à mémoriser un ensemble de données Ens en correspondance avec un identificateur IdE qui peut être une référence déterminée par l'utilisateur et rend accessible cet ensemble de données Ens au moyen de l'identificateur IdE.

Le serveur d'application SA contient une interface serveur IS et un module de gestion GES.

L'interface serveur IS a pour fonctionnalité d'établir une communication avec le terminal de communication TC et de fournir à l'utilisateur du terminal de communication un service de sauvegarde de données.

Le module de gestion GES a pour fonctionnalité de récupérer des informations sur des serveurs de sauvegarde SVₙ aptes à fournir un service de sauvegarde de données.

En fonction des informations récupérées, le module de gestion GES attribue à chaque serveur SVₙ un identificateur IdSₙ et un ensemble de facteurs de risque Frₙ comprenant par exemple :
- un facteur de risque de séisme,
- un facteur de risque de cyclone,
- un facteur de risque d'inondation,
- un facteur d'échelle de température, et
- un facteur de stabilité politique.

Le module de gestion GES établit une table de correspondance Tab dans laquelle sont mémorisés des identificateurs IdSₙ de serveurs de sauvegarde respectivement en correspondance avec des ensembles de facteurs de risque Frₙ.

Optionnellement, le module de gestion GES attribue un niveau de confiance Kₙ à chaque serveur SVₙ en fonction de l'ensemble de facteurs associé au serveur SVₙ. Le niveau de confiance Kₙ définit une fiabilité de sauvegarde de données par le serveur SVₙ par rapport à des risques de destruction des données sauvegardées ou de pertes d'informations dans les données sauvegardées.

Le niveau de confiance Kₙ peut être déterminé par exemple de manière probabiliste en fonction d'informations relatives aux serveurs de sauvegarde. Pour chaque serveur de sauvegarde, les facteurs de risque peuvent être fournis directement par l'opérateur gérant le serveur ou obtenues par tout autre moyen à partir d'informations relatives aux serveurs de sauvegarde. Selon un exemple, l'opérateur d'un serveur de sauvegarde SVₙ fournit un facteur de risque de séisme relatif au serveur de sauvegarde et le serveur d'application SA utilise directement cette information. Selon un autre exemple, le serveur d'application SA détermine la localisation d'un serveur de sauvegarde SVₙ et détermine un facteur de risque de séisme relatif au serveur de sauvegarde à partir de ladite localisation et d'informations sur les risques de séisme dans la région correspondant à ladite localisation, ces informations pouvant être obtenues de diverses manières, par exemple à partir de bases de données ou d'organismes officiels.

Le terminal de communication TC comprend une interface client IC pour établir une communication avec l'interface serveur IS du serveur d'application SA et avec des serveurs de sauvegarde SVₙ.

L'interface client IC a pour fonctionnalité d'analyser et de comparer l'intégrité d'un même ensemble de données Ens sauvegardé dans chacun des serveurs de sauvegarde sélectionnés. L'interface client IC détermine ainsi la fiabilité des serveurs de sauvegarde afin de garder ou d'abandonner des serveurs de sauvegarde.

Par ailleurs, l'interface client IC recourt à un mécanisme d'authentification avant toute communication avec un serveur de sauvegarde.

Le terminal de communication TC comprend en outre un module d'optimisation OPT qui a pour fonctionnalité de déterminer des serveurs de sauvegarde SVₙ aptes à fournir un service de sauvegarde de données au moyen d'un algorithme de sauvegarde de données, utilisant notamment des contraintes prédéterminées relatives à l'utilisateur.

L'algorithme de sauvegarde de données détermine un nombre NS de serveurs de sauvegarde à utiliser en fonction d'une qualité Q et d'un niveau de confiance Kₙ attribué à chaque serveur de sauvegarde SVₙ, le nombre NS étant au moins égal à 3. En particulier, l'algorithme compare le niveau de confiance Kₙ de chaque serveur pour sélectionner le nombre NS de serveurs de sauvegarde à utiliser en fonction de la qualité Q requise par l'utilisateur.

Une qualité Q de sauvegarde est définie en fonction au moins de l'un des paramètres suivants :
- le statut privé, public ou professionnel de l'opérateur gérant chaque serveur de sauvegarde,
- la durée de sauvegarde souhaitée de l'ensemble de données, et
- un facteur de fiabilité, par exemple de 99,99% ou 99,999%.

Certains paramètres sont par exemple fournis par l'utilisateur, comme la durée de sauvegarde des données souhaitée par l'utilisateur. Le facteur de fiabilité peut être également directement fourni par l'utilisateur ou déduit d'informations fournies par l'utilisateur et de la nature des données à sauvegarder.

Selon un exemple, un utilisateur peut souhaiter sauvegarder des images, telles que des photographies personnelles, à titre privé, pendant cinquante ans, avec une contrainte faible de garantie de conservation de données, et l'algorithme détermine ainsi un facteur de fiabilité d'environ 99,9%.

Selon un autre exemple, un utilisateur peut souhaiter sauvegarder des données confidentielles, telles que des documents de travail, à titre professionnel, pendant dix ans, avec une contrainte élevée de garantie de conservation de données, et l'algorithme détermine ainsi un facteur de fiabilité d'environ 99,999%.

Le niveau de confiance Kₙ attribué à chaque serveur de sauvegarde SVₙ peut être fourni par le serveur d'application SA ou déterminé par le terminal de communication TC en fonction d'ensembles de facteurs de risque Frₙ associés respectivement à des serveurs SVₙ fournis par le serveur d'application SA.

Le terminal de communication TC comprend en outre un module de téléchargement MT pour télécharger un même ensemble de données Ens depuis le terminal de communication TC vers chacun des serveurs de sauvegarde sélectionnés.

Optionnellement, le module de téléchargement MT a pour fonctionnalité de chiffrer l'ensemble de données Ens à mémoriser. Ainsi, le module de téléchargement MT chiffre des données avant de les transmettre à un serveur de sauvegarde et déchiffre ces mêmes données lorsqu'elles sont récupérées depuis le serveur de sauvegarde.

Le module de téléchargement MT peut réserver un espace mémoire dans un serveur de sauvegarde afin d'effectuer un test de mémorisation de données. Par exemple, le module MT requiert au serveur de sauvegarde la mémorisation de données provisoires ayant la même taille que l'ensemble de données Ens à mémoriser dans un espace mémoire, et si cette mémorisation est un succès, le serveur de sauvegarde mémorise ledit ensemble de données Ens dans ledit espace mémoire.

Le module de téléchargement MT attribue un identificateur IdE à chaque ensemble de données Ens à mémoriser et associe à l'identificateur IdE des mots-clés pour caractériser et indexer l'ensemble de données. Par exemple, l'utilisateur est invité à saisir des mots-clés qui lui permettront de retrouver l'ensemble de données Ens qu'il souhaite sauvegarder.

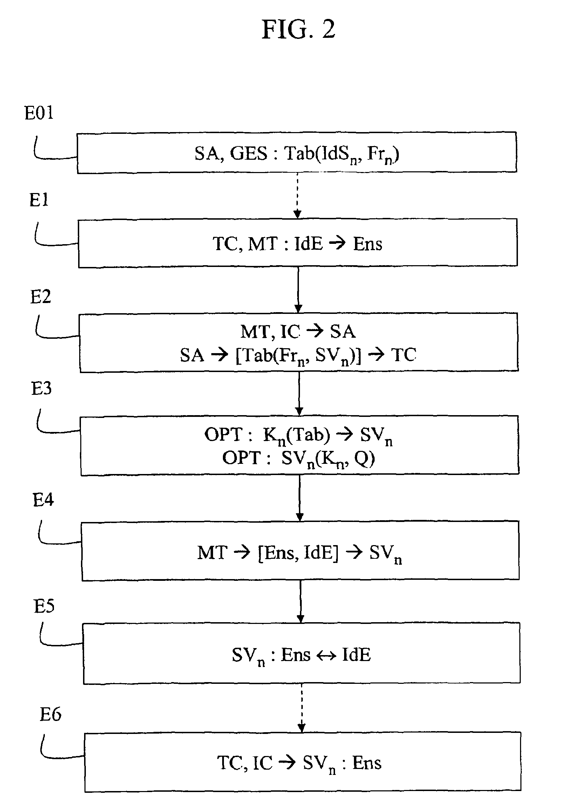

En référence à la figure 2, un procédé pour sauvegarder des données d'un utilisateur selon une réalisation de l'invention comprend des étapes E1 à E6 exécutées dans le système de sauvegarde de données.

A une étape préliminaire E01, le module de gestion GES du serveur d'application SA récupère des informations sur des serveurs de sauvegarde SVₙ aptes à fournir un service de sauvegarde de données. En particulier, le module de gestion GES détermine un ensemble de facteurs de risque Frₙ en fonction des informations récupérées, ledit ensemble de facteurs de risque comprenant par exemple un facteur de risque de séisme, un facteur de risque de cyclone, un facteur de risque d'inondation, un facteur d'échelle de température, et un facteur de stabilité politique. Le module de gestion GES attribue à chaque serveur SVₙ un identificateur IdSₙ associé à l'ensemble de facteurs Frₙ déterminé. Les identificateurs IdSₙ de serveurs de sauvegarde sont mémorisés respectivement en correspondance avec les ensembles de facteurs Frₙ dans une table de correspondance Tab.

Un identificateur IdSₙ d'un serveur de sauvegarde contient notamment une adresse IP ("Internet Protocol" en anglais) du serveur de sauvegarde et une adresse physique indiquant par exemple la ville dans laquelle le serveur est situé.

Optionnellement, le module de gestion GES attribue niveau de confiance Kₙ à chaque serveur SVₙ en fonction de l'ensemble de facteurs de risque Frₙ associé au serveur SVₙ.

A l'étape E1, l'utilisateur souhaite effectuer une sauvegarde d'un ensemble de données Ens qui est présent dans une mémoire du terminal de communication TC.

Le module de téléchargement MT du terminal de communication TC invite l'utilisateur à déterminer des mots-clés, par exemple oralement en les dictant ou manuellement en les saisissant à l'aide d'un clavier, pour caractériser et indexer l'ensemble de données Ens. Le module de téléchargement MT attribue un identificateur IdE à l'ensemble de données Ens et associe les mots-clés précédemment déterminés à l'identificateur IdE. L'identificateur IdE peut être une référence que l'utilisateur définit lui-même ou une référence créée automatiquement par le module de téléchargement MT en fonction des mots-clés.

A l'étape E2, le module de téléchargement MT transmet une requête au serveur d'application SA via l'interface client IC afin de récupérer des informations sur des serveurs de sauvegarde. En réponse à la requête, le server d'application SA transmet au terminal de communication TC une table de correspondance Tab contenant des ensembles de facteurs de risque Frₙ relatifs à des serveurs de sauvegarde SVₙ. Optionnellement, la table de correspondance Tab contient un niveau de confiance Kₙ attribué à chaque serveur de sauvegarde SVₙ.

A l'étape E3, le module d'optimisation OPT attribue un niveau de confiance Kₙ à chaque serveur de sauvegarde SVₙ identifié dans la table Tab en fonction de l'ensemble de facteurs de risque Frₙ associé respectivement au serveur de sauvegarde SVₙ. Si la table de correspondance Tab contient déjà des niveaux de confiance Kₙ attribués aux serveurs SVₙ, le module d'optimisation OPT peut utiliser ces niveaux de confiance présents dans la table ou déterminer quand même de nouveaux niveaux de confiance qui peuvent être différents des niveaux de confiance présents dans la table, en utilisant une autre méthode de détermination.

Le module d'optimisation OPT détermine des serveurs de sauvegarde SVₙ aptes à fournir un service de sauvegarde de données, en utilisant notamment des contraintes prédéterminées relatives à l'utilisateur. Le module d'optimisation OPT détermine un nombre NS de serveurs de sauvegarde au moins égal à trois en fonction d'une qualité Q de sauvegarde reflétant notamment des contraintes prédéterminées relatives à l'utilisateur et des niveaux de confiance Kₙ attribués respectivement aux serveurs de sauvegarde SVₙ. Comme indiqué précédemment, la qualité Q de sauvegarde est déterminée notamment en fonction au moins de l'un des paramètres suivants incluant le statut privé ou professionnel de l'utilisateur, la durée de sauvegarde souhaitée de l'ensemble de données, et un facteur de fiabilité, par exemple de 99,99% ou 99,999%, requis par l'utilisateur par rapport à la conservation de l'ensemble de données.

A titre d'exemple, le module d'optimisation OPT utilise un algorithme prenant en entrée les différents niveaux de confiance Kₙ des serveurs de sauvegarde et sélectionne un nombre minimal NS de serveurs de sauvegarde SVₙ en fonction de la qualité Q requise par l'utilisateur. Notamment, la combinaison des serveurs de sauvegarde sélectionnés satisfait un niveau de confiance global correspondant à la qualité Q requise par l'utilisateur. Le module d'optimisation OPT peut proposer plusieurs combinaisons différentes de serveurs de sauvegarde dont le nombre est au moins égal à trois.

Par exemple, plus la fiabilité F requise par l'utilisateur est élevée, plus le nombre minimal NS de serveurs de sauvegarde à utiliser sera a priori élevé.

Par exemple, les serveurs de sauvegarde peuvent être sélectionnés de sorte que chaque serveur soit situé à une distance minimale de chacun des autres serveurs.

A l'étape E4, le module de téléchargement MT transmet l'ensemble de données Ens, et l'identificateur IdE associé, à chaque serveur de sauvegarde SVₙ sélectionné, par exemple de manière quasi simultanée ou dans un intervalle de temps très court. Les données sont optionnellement chiffrées avant d'être transmises aux serveurs de sauvegarde.

A l'étape E5, chaque serveur de sauvegarde SVₙ mémorise l'ensemble de données Ens en correspondance avec l'identificateur IdE. Optionnellement, le serveur de sauvegarde informe le terminal de communication que l'ensemble de données a été mémorisé avec succès.

A l'étape E6 optionnelle, l'interface client IC du terminal de communication TC compare l'intégrité de l'ensemble de données Ens mémorisé dans chacun des serveurs de sauvegarde sélectionnés SVₙ, afin éventuellement d'abandonner un serveur de sauvegarde défaillant et de sélectionner un autre serveur de sauvegarde en collaborant avec le module d'optimisation OPT.

L'utilisateur peut alors accéder à tout moment à l'ensemble de données sauvegardé dans l'un des serveurs de sauvegarde depuis le terminal de communication à l'aide de l'identificateur IdE ou de mots-clés caractérisant l'ensemble de données.

L'invention décrite ici concerne un procédé et un terminal pour sauvegarder des données à travers un réseau de télécommunications. Selon une implémentation de l'invention, les étapes du procédé de l'invention sont déterminées par les instructions d'un programme d'ordinateur incorporé dans un terminal, tel que le terminal de communication TC. Le programme comporte des instructions de programme, qui lorsque ledit programme est chargé et exécuté dans le terminal, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour sauvegarder un ensemble de données (Ens) d'un utilisateur à travers un réseau de télécommunications (RT), **caractérisé en ce qu'**il comprend les étapes suivantes dans un terminal (TC) :
récupérer (E2) depuis un serveur d'application (SA) une table (Tab) contenant des ensembles de facteurs de risque (Frₙ) respectivement associés à des serveurs de sauvegarde (SVₙ),
attribuer (E3) un niveau de confiance (Kₙ) à chaque serveur de sauvegarde (SVₙ) identifié dans la table (Tab) en fonction de l'ensemble de facteurs de risque (Frₙ) associé au serveur de sauvegarde (SVₙ),
sélectionner (E3) au moins trois serveurs de sauvegarde en fonction des niveaux de confiance (Kₙ) attribués respectivement aux serveurs de sauvegarde (SVₙ), et
transmettre (E4) l'ensemble de données (Ens) à chaque serveur de sauvegarde sélectionné (SVₙ) qui mémorise l'ensemble de données.

2. Procédé conforme à la revendication 1, selon lequel chaque ensemble de facteurs de risque (Frₙ) relatif à un serveur de sauvegarde (SVₙ) comprend au moins un facteur parmi un facteur de risque de séisme, un facteur de risque de cyclone, un facteur de risque d'inondation, un facteur d'échelle de température, et un facteur de stabilité politique.

3. Procédé conforme à la revendication 1 ou 2, selon lequel les serveurs de sauvegarde sont sélectionnés en outre en fonction d'une qualité de sauvegarde requise par l'utilisateur.

4. Procédé conforme à la revendication 3, selon lequel la qualité de sauvegarde est déterminée par au moins l'un des paramètres suivants incluant le statut privé, public ou professionnel de l'opérateur gérant chaque serveur de sauvegarde, la durée de sauvegarde souhaitée de l'ensemble de données, et un facteur de fiabilité requis par l'utilisateur par rapport à la conservation de l'ensemble de données.

5. Procédé conforme à l'une des revendications 1 à 4, selon lequel les serveurs de sauvegarde sélectionnés sont gérés respectivement par des opérateurs différents.

6. Procédé conforme à l'une des revendications 1 à 4, selon lequel les serveurs de sauvegarde sélectionnés sont gérés en partie ou en totalité par un même opérateur.

7. Terminal (TC) pour sauvegarder un ensemble de données (Ens) d'un utilisateur à travers un réseau de télécommunications (RT), **caractérisé en ce qu'**il comprend :
des moyens (MT) pour récupérer depuis un serveur d'application (SA) une table (Tab) contenant des ensembles de facteurs de risque (Frₙ) respectivement associés à des serveurs de sauvegarde (SVₙ),
des moyens (OPT) pour attribuer un niveau de confiance (Kₙ) à chaque serveur de sauvegarde (SVₙ) identifié dans la table (Tab) en fonction de l'ensemble de facteurs de risque (Frₙ) associé au serveur de sauvegarde (SVₙ),
des moyens (OPT) pour sélectionner au moins trois serveurs de sauvegarde en fonction des niveaux de confiance (Kₙ) attribués respectivement aux serveurs de sauvegarde (SVₙ), et
des moyens (MT) pour transmettre l'ensemble de données (Ens) à chaque serveur de sauvegarde sélectionné (SVₙ) qui mémorise l'ensemble de données.

8. Terminal conforme à la revendication 8, comprenant en outre des moyens (IC) pour comparer l'intégrité de l'ensemble de données (Ens) mémorisé dans chacun des serveurs de sauvegarde sélectionnés.

9. Serveur d'application (SA) pour sauvegarder un ensemble de données (Ens) d'un utilisateur à travers un réseau de télécommunications (RT), **caractérisé en ce qu'**il comprend des moyens (GES) pour déterminer des ensembles de facteurs de risque (Frₙ) respectivement associés à des serveurs de sauvegarde (SVₙ) et des moyens (GES) pour transmettre une table (Tab) contenant lesdits ensembles de facteurs de risque (Frₙ) à un terminal (TC), afin que le terminal attribue un niveau de confiance (Kₙ) à chaque serveur de sauvegarde (SVₙ) identifié dans la table (Tab) en fonction de l'ensemble de facteurs de risque (Frₙ) et transmette un ensemble de données (Ens) à au moins trois serveurs de sauvegarde sélectionnés en fonction des niveaux de confiance (Kₙ) attribués respectivement aux serveurs de sauvegarde (SVₙ).

10. Programme d'ordinateur apte à être mis en oeuvre dans un terminal (TC) pour sauvegarder un ensemble de données (Ens) d'un utilisateur à travers un réseau de télécommunications (RT), ledit programme étant **caractérisé en ce qu'**il comprend des instructions qui, lorsque le programme est chargé et exécuté dans ledit terminal, réalisent les étapes suivantes :
récupérer (E2) depuis un serveur d'application (SA) une table (Tab) contenant des ensembles de facteurs de risque (Frₙ) respectivement associés à des serveurs de sauvegarde (SVₙ),
attribuer (E3) un niveau de confiance (Kₙ) à chaque serveur de sauvegarde (SVₙ) identifié dans la table (Tab) en fonction de l'ensemble de facteurs de risque (Frₙ) associé au serveur de sauvegarde (SVₙ),
sélectionner (E3) au moins trois serveurs de sauvegarde en fonction des niveaux de confiance (Kₙ) attribués respectivement aux serveurs de sauvegarde (SVₙ), et
transmettre (E4) l'ensemble de données (Ens) à chaque serveur de sauvegarde sélectionné (SVₙ) qui mémorise l'ensemble de données.

## Patentansprüche

1. Verfahren zur Sicherung eines Datensatzes (Ens) eines Benutzers über ein Telekommunikationsnetzwerk (RT), **dadurch gekennzeichnet, dass** es das Durchführen der folgenden Schritte in einem Endgerät (TC) umfasst:
Abrufen (E2), von einem Backup-Server (SA), einer Tabelle (Tab) mit Sätzen von Risikofaktoren (Frₙ), welche jeweils mit Backup-Servern (SVₙ) assoziiert sind,
Zuordnen (E3) einer Vertrauensstufe (Kₙ) zu jedem in der Tabelle (Tab) identifizierten Backup-Server (SVₙ) in Abhängigkeit von dem mit dem Backup-Server (SVₙ) assoziierten Satz von Risikofaktoren (Frₙ),
Auswählen (E3) von mindestens drei Backup-Servern in Abhängigkeit von den den Backup-Servern (SVₙ) jeweils zugeordneten Vertrauensstufen (Kₙ), und
Senden (E4) des Datensatzes (Ens) an jeden ausgewählten Backup-Server (SVₙ), welcher den Datensatz speichert.

2. Verfahren nach Anspruch 1, wobei jeder sich auf einen Sicherungsspeicher (SVₙ) beziehende Satz von Risikofaktoren (Frₙ) mindestens einen der folgenden Faktoren umfasst: Erdbebenrisiko, Wirbelsturmrisiko, Überschwemmungsrisiko, Temperaturskalenrisiko und politisches Stabilitätsrisiko.

3. Verfahren nach Anspruch 1 oder 2, wobei die Backup-Server weiterhin in Abhängigkeit von einer vom Benutzer geforderten Backup-Qualität ausgewählt werden.

4. Verfahren nach Anspruch 3, wobei die Backup-Qualität durch mindestens einen der folgenden Parameter bestimmt wird, welche umfassen: den privaten, öffentlichen oder beruflichen Status der Betreibers, welcher jeden Backup-Server verwaltet, die gewünschte Dauer für die Sicherung des Datensatzes, und einen vom Benutzer in Bezug auf die Speicherung des Datensatzes geforderten Zuverlässigkeitsfaktor.

5. Verfahren nach einem der Ansprüche 1 bis 4, wobei die ausgewählten Backup-Server jeweils von unterschiedlichen Betreibern verwaltet werden.

6. Verfahren nach einem der Ansprüche 1 bis 4, wobei die ausgewählten Backup-Server zum Teil oder insgesamt von einem selben Betreiber verwaltet werden.

7. Endgerät (TC) zur Sicherung eines Datensatzes (Ens) eines Benutzers über ein Telekommunikationsnetzwerk (RT), **dadurch gekennzeichnet, dass** es umfasst:
Mittel (MT) zum Abrufen, von einem Backup-Server (SA), einer Tabelle (Tab) mit Sätzen von Risikofaktoren (Frₙ), welche jeweils mit Backup-Servern (SVₙ) assoziiert sind,
Mittel (OPT) zum Zuordnen einer Vertrauensstufe (Kₙ) zu jedem in der Tabelle (Tab) identifizierten Backup-Server (SVₙ) in Abhängigkeit von dem mit dem Backup-Server (SVₙ) assoziierten Satz von Risikofaktoren (Frₙ),
Mittel (OPT) zum Auswählen von mindestens drei Backup-Servern in Abhängigkeit von den den Backup-Servern (SVₙ) jeweils zugeordneten Vertrauensstufen (Kₙ), und
Mittel (MT) zum Senden des Datensatzes (Ens) an jeden ausgewählten Backup-Server (SVₙ), welcher den Datensatz speichert.

8. Endgerät nach Anspruch 8, weiterhin umfassend Mittel (IC) zum Vergleichen der Integrität des in einem jeden der ausgewählten Backup-Server gespeicherten Datensatzes (Ens).

9. Anwendungsserver (SA) zur Sicherung eines Datensatzes (Ens) eines Benutzers über ein Telekommunikationsnetzwerk (RT), **dadurch gekennzeichnet, dass** er Mittel (GES) zum Bestimmen von Sätzen von Risikofaktoren (Frₙ), welche jeweils mit Backup-Servern (SVₙ) assoziiert sind, und Mittel (GES) zum Senden einer Tabelle (Tab), welcher die besagten Sätze von Risikofaktoren (Frₙ) enthält, an ein Endgerät (TC) umfasst, damit das Endgerät jedem in der Tabelle (Tab) identifizierten Backup-Server (SVₙ) in Abhängigkeit von den Sätzen von Risikofaktoren (Frₙ) eine Vertrauensstufe (Kₙ) zuordnet und in Abhängigkeit von den jeweils den Backup-Servern (SVₙ) zugeordneten Vertrauensstufen (Kₙ) einen Datensatz (Ens) an mindestens drei ausgewählte Backup-Server sendet.

10. Computerprogramm zur Ausführung in einem Endgerät (TC) für die Sicherung eines Datensatzes (Ens) eines Benutzers über ein Telekommunikationsnetzwerk (RT), wobei das besagte Programm **dadurch gekennzeichnet ist, dass** es Befehle umfasst, welche, wenn das Programm geladen und in dem besagten Endgerät ausgeführt wird, die folgenden Schritte durchführen:
Abrufen (E2), von einem Backup-Server (SA), einer Tabelle (Tab) mit Sätzen von Risikofaktoren (Frₙ), welche jeweils mit Backup-Servern (SVₙ) assoziiert sind,
Zuordnen (E3) einer Vertrauensstufe (Kₙ) zu jedem in der Tabelle (Tab) identifizierten Backup-Server (SVₙ) in Abhängigkeit von dem mit dem Backup-Server (SVₙ) assoziierten Satz von Risikofaktoren (Frₙ),
Auswählen (E3) von mindestens drei Backup-Servern in Abhängigkeit von den den Backup-Servern (SVₙ) jeweils zugeordneten Vertrauensstufen (Kₙ), und
Senden (E4) des Datensatzes (Ens) an jeden ausgewählten Backup-Server (SVₙ), welcher den Datensatz speichert.

## Claims

1. A method for backing up a data set (Ens) of a user over a telecommunications network (RT), **characterized in that** it comprises the following steps within a terminal (TC):
retrieving (E2) from an application server (SA) a table (Tab) containing sets of risk factors (Frₙ) respectively associated with backup servers (SVₙ),
assigning (E3) a level of trust (Kₙ) to each backup server (SVₙ) identified in the table (Tab) based on the set of risk factors (Frₙ) associated with the backup server (SVₙ),
selecting (E3) at least three backup servers based on the levels of trust (Kₙ) respectively assigned to the backup servers (SVₙ), and
transmitting (E4) the data set (Ens) to each selected backup server (SVₙ) which saves the data set.

2. A method according to claim 1, whereby each set of risk factors (Frₙ) related to a backup server (SVₙ) comprises at least one factor from among an earthquake risk factor, a cyclone risk factor, a flood risk factor, a temperature scale factor, and a political stability factor.

3. A method according to claim 1 or 2, whereby the backup servers are further selected based on a backup quality requested by the user.

4. A method according to claim 3, whereby the backup quality is determined by at least one of the following parameters including the private, public, or professional status of the operator managing each backup server, the desired backup duration for the data set, and a reliability factor requested by the user with regard to saving the data set.

5. A method according to one of the claims 1 to 4, whereby the selected backup servers are respectively managed by different operators.

6. A method according to one of the claim 1 to 4, whereby the selected backup servers are partly or fully managed by a single operator.

7. A terminal (TC) for backing up a data set (Ens) of a user over a telecommunications network (RT), **characterized in that** it comprises:
means (MT) for retrieving from an application server (SA) a table (Tab) containing sets of risk factors (Frₙ) respectively associated with backup servers (SVₙ),
means (OPT) for assigning a level of trust (Kₙ) to each backup server (SVₙ) identified in the table (Tab) based on the set of risk factors (Frₙ) associated with the backup server (SVₙ),
means (OPT) for selecting at least three backup servers based on the levels of trust (Kₙ) respectively assigned to the backup servers (SVₙ), and
means (MT) for transmitting the data set (Ens) to each selected backup server (SVₙ) which saves the data set.

8. A terminal according to claim 8, further comprising means (IC) for comparing the integrity of the data set (Ens) saved within each of the selected backup servers.

9. An application server (SA) for backing up a data set (Ens) of a user over a telecommunications network (RT), **characterized in that** it comprises means (GES) for determining sets of risk factors (Frₙ) respectively associated with backup servers (SVₙ) and means (GES) for transmitting a table (Tab) containing said sets of risk factors (Frₙ) to a terminal (TC), so that the terminal assigns a level of trust (Kₙ) with each backup server (SVₙ) identified in the table (Tab) based on the set of risk factors (Frₙ) and transmits a data set (Ens) to at least three selected backup servers depending on the levels of trust (Kₙ) respectively assigned to the backup servers (SVₙ).

10. A computer program capable of being implemented within a terminal (TC) for backing up a data set of a user (Ens) over a telecommunications network (RT), said program being **characterized in that** it comprises instructions that, when the program is loaded and executed within said terminal, carry out the following steps:
retrieving (E2) from an application server (SA) a table (Tab) containing sets of risk factors (Frₙ) respectively associated with backup servers (SVₙ),
assigning (E3) a level of trust (Kₙ) to each backup server (SVₙ) identified in the table (Tab) based on the set of risk factors (Frₙ) associated with the backup server (SVₙ),
selecting (E3) at least three backup servers based on the levels of trust (Kₙ) respectively assigned to the backup servers (SVₙ), and
transmitting (E4) the data set (Enₛ) to each selected backup server (SVₙ) which saves the data set.
